# EUROPEAN PATENT APPLICATION

(11) **EP 4 379 014 A1**
(43) Date of publication of application: **05.06.2024**
(21) Application number: 22849537.0
(22) Date of filing: 27.07.2022
(51) Int. Cl.: C09J 175/08

(54) **ONE-PACK TYPE ADHESIVE AGENT COMPOSITION AND CURED PRODUCT**

(30) Priority: 30.07.2021 JP 2021125696
(71) Applicant: AGC INC., Chiyoda-ku, Tokyo 1008405 (JP)
(72) Inventor: SHIMOMA, Hitoshi, Tokyo 100-8405 (JP); NAKAMURA, Makito, Tokyo 100-8405 (JP); SUZUKI, Chitoshi, Tokyo 100-8405 (JP)
(74) Representative: Müller-Boré & Partner Patentanwälte PartG mbB
(86) International application number: PCT/JP2022/028931
(87) International publication number: WO 2023/008476

(57) **Abstract**

There is provided a one-component adhesive composition that is excellent in the heat resistance, moist heat resistance, and creep resistance at high temperature (90°C) of a cured product, can maintain adhesiveness even under high temperature, has a small temperature dependence of viscoelastic characteristics (storage modulus), and can stably exhibit adhesiveness in a wide temperature region, and a cured product. A one-component adhesive composition including an isocyanate group-terminated urethane prepolymer obtained by reacting a polyoxyalkylene polymer with a polyisocyanate compound, wherein the polyoxyalkylene polymer has a functional group that can react with an isocyanate group, and has a number average molecular weight of 8000 or more, and in the polyoxyalkylene polymer, a content proportion of oxyethylene groups to a total amount of oxyalkylene groups is 5% by mass or more and 60% by mass or less.

## Description

### Technical Field

The present invention relates to a one-component adhesive composition and a cured product, and particularly to a urethane-based moisture-curable one-component adhesive composition that adheres different materials such as a resin and a metal, and a cured product obtained by curing the one-component adhesive composition.

### Background Art

In the automobile field, while the increase in environmental awareness and the trend toward no gasoline advance, weight reduction is required as a fuel consumption improvement measure. Steel plates are generally used for the interior and exterior articles, such as bodies, front doors, rear doors, back doors, front bumpers, rear bumpers, and rocker moldings, of automobiles, but in order to meet the demand for weight reduction, the number of cases increases where instead of steel plates, reinforced plastics such as carbon fiber-reinforced plastics and glass fiber-reinforced plastics, and various types of resin materials including polypropylene are used as the interior and exterior parts of automobiles. With this, the importance of techniques for adhering different materials such as a metal and a resin increases.

For adhesives that adhere different materials such as a resin material and a metal, cured adhesives' heat resistance, moist heat resistance, and creep resistance, particularly creep resistance under high temperature, retained for a long period in a state in which self-weight is loaded are required in addition to adhesiveness. Therefore, the application of urethane-based adhesives, instead of conventionally used epoxy-based adhesives, is studied.

For example, PTL1 discloses a two-component curable urethane-based composition including a main agent containing a urethane prepolymer, and a curing agent containing a polyether polyol having a predetermined molecular weight and an amine catalyst, and it is stated that the creep resistance is good.

PTL2 discloses a one-component curable composition in which a prepolymer obtained by reacting polypropylene glycol with a polyisocyanate compound is formed into a cured product.

### Citation List

### Patent Literature

PTL1: WO 2018/100685
PTL2: JP 2000-198972 A

### Summary of Invention

### Technical Problem

For two-component curable urethane-based compositions, problems such as the complicatedness of measuring work and the like, and variations in work causing difficulty in obtaining homogeneous cured products occur easily, and from the viewpoint of workability, one-component adhesive compositions are required. However, cured products obtained from conventional one-component curable compositions have poor creep resistance, and there is room for improvement in adhesiveness under high temperature.

In view of the problem, it is an object of the present invention to provide a one-component adhesive composition that is excellent in the heat resistance, moist heat resistance, and creep resistance at high temperature (90°C) ("Thermal creep resistance" in Table 2 described later) of a cured product, can maintain adhesiveness even under high temperature, has a small temperature dependence of viscoelastic characteristics (storage modulus), and can stably exhibit adhesiveness in a wide temperature region, and a cured product obtained by curing the one-component adhesive composition.

### Solution to Problem

The present inventors have studied diligently in order to solve the problem, and as a result, found that the problem can be solved by a one-component adhesive composition including an isocyanate group-terminated urethane prepolymer obtained by reacting a particular polyoxyalkylene polymer with a polyisocyanate compound. Thus, the present inventors have completed the present invention.

Specifically, the present invention is as follows.
[1] A one-component adhesive composition including an isocyanate group-terminated urethane prepolymer obtained by reacting a polyoxyalkylene polymer with a polyisocyanate compound, wherein the polyoxyalkylene polymer has a functional group that can react with an isocyanate group, and has a number average molecular weight of 8000 or more, and in the polyoxyalkylene polymer, a content proportion of oxyethylene groups to a total amount of oxyalkylene groups is 5% by mass or more and 60% by mass or less.
[2] The one-component adhesive composition according to the [1], wherein a number of functional groups of the polyoxyalkylene polymer is 3 or more.
[3] The one-component adhesive composition according to the [1] or [2], wherein the polyoxyalkylene polymer further includes a unit based on propylene oxide.
[4] The one-component adhesive composition according to any of the [1] to [3], wherein inter-crosslinking molecular weight obtained by dividing the number average molecular weight of the polyoxyalkylene polymer by a number of functional groups per molecule of the polyoxyalkylene polymer is 2000 or more and 6000 or less.
[5] The one-component adhesive composition according to any of the [1] to [4], wherein the functional group is a hydroxyl group.
[6] The one-component adhesive composition according to the [5], wherein an isocyanate index representing 100 times a molar ratio of isocyanate groups in the polyisocyanate compound to hydroxyl groups in the polyoxyalkylene polymer (isocyanate group/hydroxyl group) is 300 or more and 600 or less.
[7] The one-component adhesive composition according to any of the [1] to [6], wherein the polyisocyanate compound contains 20 to 40% by mass of isocyanate groups.
[8] The one-component adhesive composition according to any of the [1] to [7], wherein an inter-crosslinking molecular weight of the isocyanate group-terminated urethane prepolymer is 2000 or more and 6000 or less.
[9] The one-component adhesive composition according to any of [1] to [8], wherein oxyethylene group content to a total amount of oxyalkylene groups in the isocyanate group-terminated urethane prepolymer is 5% by mass or more and 60% by mass or less.
[10] The one-component adhesive composition according to any of [1] to [9], wherein a content of the isocyanate group-terminated urethane prepolymer is 50% by mass or more and 100% by mass or less based on a total amount of the one-component adhesive composition.
[11] A cured product obtained by curing the one-component adhesive composition according to any of the [1] to [10].
[12] The cured product according to the [11], cured by moisture.

### Advantageous Effects of Invention

According to the present invention, it is possible to provide a one-component adhesive composition that is excellent in the heat resistance, moist heat resistance, and creep resistance at high temperature (90°C) of a cured product, can maintain adhesiveness even under high temperature, has a small temperature dependence of viscoelastic characteristics (storage modulus), and can stably exhibit adhesiveness in a wide temperature region, and a cured product obtained by curing the one-component adhesive composition.

### Description of Embodiments

The definitions and meanings of the terms herein are as follows.

As used herein, ones considered preferred can be optionally adopted, and it can be said that combinations of preferred ones are more preferred.

As used herein, the description of "XX to YY" means "XX or more and YY or less". As used herein, for preferred numerical value ranges (for example, ranges of content), lower limit values and upper limit values described stepwise can each be independently combined. For example, from the description of "preferably 10 to 90, more preferably 30 to 60", "the preferred lower limit value (10)" and "the more preferred upper limit value (60)" can also be combined into " 10 to 60". In the numerical value ranges described herein, the upper limit values or lower limit values of the numerical value ranges may be replaced by values shown in Examples.

A "unit" constituting a polymer means an atomic group that a monomer forms by polymerization.

A "polyoxyalkylene polymer" means a polymer having a polyoxyalkylene chain. A repeating unit based on an alkylene oxide is referred to as an "alkylene oxide unit".

An "isocyanate group-terminated urethane prepolymer" refers to a compound having an isocyanate group at at least part of the ends of the molecular chain and having a urethane bond in the molecular chain, obtained by reacting an organic compound having two or more hydroxyl groups in one molecule with a polyisocyanate compound.

"The inter-crosslinking molecular weight of a polyoxyalkylene polymer" means a value obtained by dividing the number average molecular weight (Mn) of a polyoxyalkylene polymer by the average number of functional groups in the polyoxyalkylene polymer. The average number of functional groups is the number of functional groups per molecule of the polyoxyalkylene polymer.

### (One-Component Adhesive Composition)

The present invention is a one-component adhesive composition including an isocyanate group-terminated urethane prepolymer obtained by reacting a particular polyoxyalkylene polymer with a polyisocyanate compound.

The one-component adhesive composition of the present invention is excellent in the heat resistance, moist heat resistance (the retention rate of breaking strength after moist heat is preferably 80% or more, more preferably 90% or more, and particularly preferably 95% or more), and creep resistance at high temperature (90°C) of a cured product thereof, can maintain adhesiveness even under high temperature, has a small temperature dependence of viscoelastic characteristics (storage modulus), and can stably exhibit adhesiveness in a wide temperature region. Each component will be described below.

### <Polyoxyalkylene Polymer>

In the one-component adhesive composition of the present invention, the polyoxyalkylene polymer constituting the isocyanate group-terminated urethane prepolymer has a functional group that can react with an isocyanate group, and has a number average molecular weight (hereinafter also described as "Mn") of 8000 or more, and in the polyoxyalkylene polymer, the content proportion of oxyethylene groups (ethylene oxide unit content; hereinafter also described as "EO unit content") to the total amount of oxyalkylene groups is 5% by mass or more and 60% by mass or less.

The EO unit content to the total amount of oxyalkylene groups in the polyoxyalkylene polymer is preferably 7% by mass or more, more preferably 9% by mass or more, and particularly preferably 11% by mass or more. The EO unit content to the total amount of oxyalkylene groups in the polyoxyalkylene polymer is preferably 28% by mass or less, more preferably 25% by mass or less, and particularly preferably 22% by mass or less.

When the EO unit content to the total amount of oxyalkylene groups in the polyoxyalkylene polymer is within the preferred range, the polyoxyalkylene polymer easily becomes amorphous and is therefore easily handled, and the heat resistance, moist heat resistance, and viscoelastic characteristics of a cured product of the obtained one-component adhesive composition easily become good.

The EO unit content to the total amount of oxyalkylene groups in the polyoxyalkylene polymer is calculated by obtaining the monomer composition of the oxyalkylene chain using ¹H-NMR. For example, when the polyoxyalkylene polymer is a polyol including a propylene oxide unit and an EO unit, the EO unit content to the total amount of oxyalkylene groups can be obtained from the area ratio of the signal of the methyl group in the propylene oxide unit to the signals of the methylene groups in the propylene oxide unit and in the EO unit.

The alkylene oxides used when the polyoxyalkylene polymer is synthesized are not particularly limited as long as they are selected so that the EO unit content to the total amount of oxyalkylene groups in the polyoxyalkylene polymer is 5% by mass or more and 60% by mass or less. The combined use of preferably an alkylene oxide having 3 to 5 carbon atoms such as propylene oxide, 1,2-butylene oxide, 2,3-butylene oxide, or isobutylene oxide and ethylene oxide is preferred, and the combined use of propylene oxide and ethylene oxide is more preferred.

When two or more alkylene oxides are subjected to ring-opening addition, the arrangement of the units derived from the alkylene oxides may be a random, block, or tapered arrangement. Here, when the arrangement of EO units and propylene oxide units is random, usually the polyoxyalkylene polymer may have a block form of propylene oxide units and a random form of EO units and propylene oxide units and may have a block form of EO units and a random form of EO units and propylene oxide units. When the arrangement of EO units and propylene oxide units is a block arrangement, the polyoxyalkylene polymer may have a block form of propylene oxide units (PO block), a block form of EO units (EO block), and a PO block in this order ("PO block-EO block-PO block" structure) or may have an EO block, a PO block, and an EO block in this order ("EO block-PO block-EO block" structure). Further, when the arrangement of EO units and propylene oxide units is tapered, usually the polyoxyalkylene polymer has a block form of propylene oxide units, a random form of EO units and propylene oxide units, and a block form of EO units.

When ethylene oxide and an alkylene oxide other than ethylene oxide are used in combination as alkylene oxides, the molar ratio of the EO unit content to the content of the units of the alkylene oxide other than ethylene oxide is not particularly limited as long as the EO unit content to the total amount of oxyalkylene groups in the polyoxyalkylene polymer is 5% by mass or more and 60% by mass or less. As the EO unit content increases, the hydrophilicity of the polyoxyalkylene polymer tends to improve. As the EO unit content decreases, the crystallinity of the polyoxyalkylene polymer tends to decrease. When the EO unit content in the polyoxyalkylene polymer is within the range, the viscosity of the obtained one-component adhesive composition decreases easily, and the moist heat resistance of a cured product of the one-component adhesive composition easily becomes good.

For the polyoxyalkylene polymer, when an EO unit is at an end, a primary hydroxyl group is at an end, and therefore the reactivity with the polyisocyanate compound tends to be higher than when a propylene oxide unit is at an end. When an EO unit is at an end of the polyoxyalkylene polymer, the moist heat resistance and creep resistance at high temperature of a cured product of the one-component adhesive composition are better, and the adhesiveness is easily maintained even under high temperature.

The Mn of the polyoxyalkylene polymer is 8000 or more, preferably 8500 or more, more preferably 9000 or more, and particularly preferably 9500 or more. The Mn of the polyoxyalkylene polymer is preferably 50000 or less, more preferably 40000 or less, further preferably 30000 or less, and particularly preferably 20000 or less. When the Mn of the polyoxyalkylene polymer is within the preferred range, the breaking strength, heat resistance, moist heat resistance, and creep resistance at high temperature (90°C) of a cured product of the obtained one-component adhesive composition are better.

The molecular weight distribution of the polyoxyalkylene polymer is not particularly limited but is preferably less than 1.20. By setting the molecular weight distribution of the polyoxyalkylene polymer at less than 1.20, the reactivity easily becomes good, the isocyanate group-terminated urethane prepolymer can be more efficiently produced, and the viscosity of the obtained isocyanate group-terminated urethane prepolymer decreases more easily.

The Mn and molecular weight distribution of the polyoxyalkylene polymer are values obtained by measurement by the method described below.

For several types of monodisperse polystyrene having different degrees of polymerization as standard samples for molecular weight measurement, measurement is performed using a commercial GPC measuring apparatus (HLC-8320GPC, manufactured by Tosoh Corporation), and a calibration curve is prepared based on the relationship between the molecular weight and retention time of the polystyrene. The polyoxyalkylene polymer, which is a measurement sample, is diluted to 0.5% by mass with tetrahydrofuran and passed through a filter having a pore diameter of 0.5 µm, and then for the measurement sample, measurement is performed using the GPC measuring apparatus. The GPC spectrum of the measurement sample is computer-analyzed using the calibration curve to obtain the Mn and weight average molecular weight (hereinafter referred to as Mw) of the measurement sample.

The molecular weight distribution is the value calculated from the Mw and Mn and is the ratio of Mw to Mn (hereinafter referred to as "Mw/Mn").

The degree of unsaturation of the polyoxyalkylene polymer is not particularly limited but is preferably 0.040 meq/g or less, more preferably 0.035 meq/g or less, and particularly preferably 0.030 meq/g or less. The degree of unsaturation of the polyoxyalkylene polymer may be zero. When the degree of unsaturation of the polyoxyalkylene polymer is equal to or less than the upper limit value, the curability of the obtained isocyanate group-terminated urethane prepolymer is better.

The degree of unsaturation of the polyoxyalkylene polymer is a value measured according to the method of JIS K1557 3: 2007.

The polyoxyalkylene polymer has a functional group that can react with an isocyanate group.

The number of functional groups of the polyoxyalkylene polymer is preferably 3 or more, more preferably 3 to 10, further preferably 3 to 8, and particularly preferably 3 to 6. The number of functional groups per molecule of the polyoxyalkylene polymer (hereinafter referred to as "the average number of functional groups") is preferably 2.5 or more, more preferably 2.8 or more, particularly preferably 3 or more and preferably 10 or less, more preferably 8 or less, further preferably 6 or less, and particularly preferably 3.

When the average number of functional groups of the polyoxyalkylene polymer is within the range, the breaking strength, heat resistance, moist heat resistance, and viscoelastic characteristics of a cured product of the obtained two-component adhesive composition easily become better.

Examples of the functional group of the polyoxyalkylene polymer include a hydroxyl group or an amino group. The functional group of the polyoxyalkylene polymer is preferably a hydroxyl group, and a polyoxyalkylene polymer in which all functional groups are hydroxyl groups is more preferred. The number of hydroxyl groups (hereinafter also referred to as "the number of hydroxyl groups") of the polyoxyalkylene polymer is preferably 3 or more, more preferably 3 to 10, further preferably 3 to 8, and particularly preferably 3 to 6. The number of hydroxyl groups per molecule of the polyoxyalkylene polymer (hereinafter referred to as "the average number of hydroxyl groups") is preferably 2.5 or more, more preferably 2.8 or more, further preferably 3.0 or more and preferably 10 or less, more preferably 8 or less, further preferably 6 or less, and particularly preferably 3.

When the average number of hydroxyl groups of the polyoxyalkylene polymer is within the range, the breaking strength, heat resistance, moist heat resistance, and viscoelastic characteristics of a cured product of the obtained one-component adhesive composition can be good.

When two or more polyoxyalkylene polymers in which the number of functional groups in one molecule is different are used in combination as polyoxyalkylene polymers, the average number of functional groups as the whole of the polyoxyalkylene polymers is preferably 3 or more. When two or more polyoxyalkylene polymers in which the number of hydroxyl groups in one molecule is different are used in combination as polyoxyalkylene polymers, the average number of hydroxyl groups as the whole of the polyoxyalkylene polymers is preferably 3 or more.

The average number of hydroxyl groups per molecule of the polyoxyalkylene polymer can also be calculated by specifying the type(s) and molar ratio of the initiator(s) using ¹³C-NMR (nuclear magnetic resonance). In the analysis by ¹³C-NMR, characteristic peaks are seen for the initiator(s), and therefore the type(s) and molar ratio of the initiator(s) can be specified from the positions of the peaks and the peak areas.

Usually, the number of hydroxyl groups in one molecule of a polyoxyalkylene polymer matches the number of hydroxyl groups in one molecule of the initiator used when the polyoxyalkylene polymer is synthesized. When a polyoxyalkylene polymer is synthesized using, for example, glycerin, as an initiator, a polyoxyalkylene polymer in which the number of hydroxyl groups in one molecule is 3 is usually obtained. When a polyoxyalkylene polymer is synthesized using, for example, pentaerythritol, as an initiator, a polyoxyalkylene polymer in which the number of hydroxyl groups in one molecule is 4 is usually obtained. When a polyoxyalkylene polymer is synthesized using, for example, dipropylene glycol, as an initiator, a polyoxyalkylene polymer in which the number of hydroxyl groups in one molecule is 2 is usually obtained.

The average number of hydroxyl groups per molecule of the polyoxyalkylene polymer can also be calculated from the number(s) of hydroxyl groups in one molecule based on the type(s) of the initiator(s), and the mole fraction(s) of the initiator(s). For example, when the amount of glycerin is 30 mol%, and the amount of dipropylene glycol is 70 mol%, the average number of hydroxyl groups is 3 × 0.3 + 2 × 0.7 = 2.3.

The inter-crosslinking molecular weight obtained by dividing the number average molecular weight (Mn) of the polyoxyalkylene polymer by the average number of functional groups is preferably 2000 or more, more preferably 2500 or more, particularly preferably 3000 or more and preferably 7000 or less, more preferably 6000 or less, and particularly preferably 5500 or less.

When such inter-crosslinking molecular weight is in the range, the storage modulus of the obtained cured product is easily maintained in a wide temperature range.

The hydroxyl value of the polyoxyalkylene polymer is not particularly limited but is preferably 2 mg KOH/g or more, more preferably 5 mg KOH/g or more, and particularly preferably 8 mg KOH/g or more and preferably 50 mg KOH/g or less, more preferably 45 mg KOH/g or less, and particularly preferably 40 mg KOH/g or less. When the hydroxyl value of the polyoxyalkylene polymer is equal to or less than the upper limit value, the viscoelastic characteristics of a cured product of the obtained one-component adhesive composition are better.

The hydroxyl value of the polyoxyalkylene polymer is a value measured and calculated according to the B method of JIS K 1557-1: 2007.

The polyoxyalkylene polymer may be used alone, and as long as the Mn thereof is 8000 or more, and the EO unit content to the total amount of oxyalkylene groups is 5% by mass or more and 60% by mass or less, two or more types of polyoxyalkylene polymers may be used in combination.

When two or more polyoxyalkylene polymers are included, the EO unit content, Mn, and molecular weight distribution of each polyoxyalkylene polymer is preferably within the preferred range.

The method for producing the polyoxyalkylene polymer is not particularly limited but is preferably a method of subjecting alkylene oxides to ring-opening addition to an initiator having three or more hydroxyl groups in one molecule in the presence of a catalyst.

Examples of an initiator having three hydroxyl groups in one molecule include glycerin. Examples of an initiator having four or more hydroxyl groups in one molecule include tetra- and higher-hydric polyhydric alcohols such as diglycerin, pentaerythritol, dipentaerythritol, and tripentaerythritol; and sugars such as glucose, sorbitol, dextrose, fructose, sucrose, and methyl glucoside, or derivatives thereof. Among these, glycerin is preferred. Glycerin is inexpensively available, and the synthesis cost of the polyoxyalkylene polymer can be reduced.

As the catalyst for subjecting the alkylene oxide to ring-opening addition polymerization to the initiator, a conventionally known catalyst can be used. Examples of the catalyst include alkali catalysts such as KOH, transition metal compound-porphyrin complex catalysts such as complexes obtained by reacting organoaluminum compounds with porphyrins, double metal cyanide complex catalysts (hereinafter also described as "DMC catalysts"), and catalysts including phosphazene compounds.

When the polyoxyalkylene polymer is obtained using a DMC catalyst, it is preferred in that the molecular weight distribution of the obtained polyoxyalkylene polymer can be narrowed, and the polyoxyalkylene polymer having low viscosity is easily obtained.

For the DMC catalyst, a conventionally known compound can be used, and also for the method for producing the polymer using a DMC catalyst, a known method can be adopted. For example, the compounds and production methods disclosed in WO 2003/062301, WO 2004/067633, JP 2004-269776 A, JP 2005-015786 A, WO 2013/065802, and JP 2015-010162 A can be used.

As the method of subjecting an alkylene oxide to ring-opening addition polymerization to an initiator to obtain the polyoxyalkylene polymer, a conventionally known method can be adopted. For example, the production methods disclosed in WO 2011/125951 and JP 5648797 B can be used.

### <Polyisocyanate Compound>

The polyisocyanate compound used for being reacted with the polyoxyalkylene polymer to obtain the isocyanate group-terminated urethane prepolymer is an organic compound having two or more isocyanate groups in one molecule. The number of isocyanate groups in one molecule is preferably 2 to 4. One polyisocyanate compound can be used alone, or two or more polyisocyanate compounds can be used in combination.

Examples of the polyisocyanate compound include linear or branched aliphatic diisocyanate compounds such as tetramethylene diisocyanate, pentamethylene diisocyanate, hexamethylene diisocyanate (HDI), 2,2,4-trimethylhexamethylene diisocyanate, 2,4,4-trimethylhexamethylene diisocyanate, dodecamethylene diisocyanate, lysine diisocyanate, 2-methylpentane-1,5-diisocyanate, and 3-methylpentane-1,5-diisocyanate;
alicyclic diisocyanate compounds such as norbornane diisocyanate (NBDI), isophorone diisocyanate (IPDI), hydrogenated xylylene diisocyanate, 4,4'-dicyclohexylmethane diisocyanate, 1,4-cyclohexane diisocyanate, methylcyclohexylene diisocyanate, 1,3-bis(isocyanatemethyl)cyclohexane, and dicyclohexylmethane diisocyanate (H₁₂MDI);
aromatic diisocyanate compounds such as tolylene diisocyanate (TDI), 2,2'-diphenylmethane diisocyanate, 2,4'-diphenylmethane diisocyanate, 4,4'-diphenylmethane diisocyanate (MDI), 1,3-phenylene diisocyanate, 1,4-phenylene diisocyanate, polymethylene polyphenylene polyisocyanate, xylylene diisocyanate (XDI), α,α,α',α'-tetramethylxylylene diisocyanate, 4,4'-dibenzyl diisocyanate, tolidine diisocyanate, and 1,5-naphthalene diisocyanate;
aromatic aliphatic diisocyanate compounds such as dialkyldiphenylmethane diisocyanate and tetraalkyldiphenylmethane diisocyanate; and
polyisocyanate compounds having three or more isocyanate groups in one molecule such as isocyanurate-modified products of the above-described diisocyanate compounds; biuret-modified products of the above-described diisocyanate compounds; allophanate-modified products of the above-described diisocyanate compounds; carbodiimide-modified products of the above-described diisocyanate compounds; tri- and higher functional isocyanate group-terminated urethane prepolymers (adduct-modified products) obtained by reacting the above-described diisocyanate compounds with polyols having three or more hydroxyl groups in one molecule; water-dispersible polyisocyanate compounds such as water-dispersible isocyanates and block isocyanates; and triphenylmethane triisocyanate.

Examples of commercial products of the isocyanurate-modified products include DURANATE TPA-100 and DURANATE TKA-100 (manufactured by Asahi Kasei Corporation) and Coronate HX (manufactured by Tosoh Corporation).

Examples of commercial products of the biuret-modified products include DURANATE 24A-100 and DURANATE 22A-75P (manufactured by Asahi Kasei Corporation).

Examples of commercial products of the tri- and higher functional isocyanate group-terminated urethane prepolymers include Coronate L, Coronate L-55E, and Coronate L-45E (all are manufactured by Tosoh Corporation).

Examples of commercial products of the water-dispersible isocyanates include DURANATE WB40-100, DURANATE WB40-80D, DURANATE WT20-100, DURANATE WL70-100, DURANATE WE50-100, and DURANATE WR80-70P (manufactured by Asahi Kasei Corporation), and Aquanate 105, Aquanate 130, Aquanate 140, Aquanate 200, and Aquanate 210 (manufactured by Tosoh Corporation).

Examples of commercial products of the block isocyanates include SU-268A, NBP-211, MEIKANATE CX, MEIKANATE TP-10, and DM-6400 (all are manufactured by Meisei Chemical Works, Ltd.); WM44-L70G (manufactured by Asahi Kasei Corporation); Aqua BI200 and Aqua BI220 (all are manufactured by Baxenden chemicals); TAKELAC W and TAKELAC WPB (all are manufactured by Mitsui Chemicals, Inc.); BURNOCK (manufactured by DIC CORPORATION); and ELASTRON (manufactured by DKS Co. Ltd.).

The content of isocyanate groups in the polyisocyanate compound is preferably 20% by mass or more, more preferably 25% by mass or more, and particularly preferably 30% by mass or more and preferably 60% by mass or less, more preferably 55% by mass or less, and particularly preferably 50% by mass or less from the viewpoint of obtaining a one-component adhesive composition excellent in breaking strength, heat resistance, and creep resistance when cured.

As the polyisocyanate compound containing isocyanate groups in the preferred range, aliphatic diisocyanate compounds, alicyclic diisocyanate compounds, and aromatic diisocyanate compounds are preferred, and specifically, MDI (isocyanate group content 33.6% by mass), polymeric MDI (isocyanate group content 31.0% by mass), crude MDI (a mixture of MDI and triphenylmethane triisocyanate), and TDI (isocyanate group content 48.2% by mass) are preferred.

When the isocyanate group-terminated urethane prepolymer is obtained, the isocyanate index representing 100 times the molar ratio of the isocyanate groups in the polyisocyanate compound to the hydroxyl groups in the polyoxyalkylene polymer (isocyanate group/hydroxyl group) is preferably 110 or more and 650 or less.

The isocyanate index is preferably 120 or more, more preferably 200 or more, and particularly preferably 300 or more and preferably 800 or less, more preferably 700 or less, and particularly preferably 680 or less. The isocyanate index within the preferred range is preferred from the viewpoint that an isocyanate group-terminated urethane prepolymer having a moderate molecular chain length can be produced, and therefore the productivity improves more, and the breaking strength of a cured product of the one-component adhesive composition of the present invention is better.

The isocyanate index is the value obtained by centupling the ratio of the number of moles of the isocyanate groups of the polyisocyanate compound to the total number of moles of the hydroxyl groups of the polyoxyalkylene polymer.

### -Method for Producing Isocyanate Group-Terminated Urethane Prepolymer-

The isocyanate group-terminated urethane prepolymer can be produced by reacting a polyoxyalkylene polymer with a polyisocyanate compound.

When the isocyanate group-terminated urethane prepolymer is obtained, another polyol (a polyol other than a polyoxyalkylene polymer) as an optional component can also be used in combination. Examples of another polyol include polyester polyols, poly(meth)acrylic polyols, polycarbonate polyols, polyolefin polyols, and castor oil-based polyols, and those described in [0016] to [0028] of JP 2020-37689 A can be used without particular limitation. A polymer polyol in which a polymer having a unit based on a (meth)acrylate monomer is dispersed in a polyether polyol can also be used. The polymer polyol may be a commercial product, and examples thereof include the "ULTIFLOW (registered trademark)" series and the "SHARPFLOW (registered trademark)" series (the above are manufactured by Sanyo Chemical Industries, Ltd.), and the "EXCENOL (registered trademark)" series (manufactured by AGC).

The content proportion of another polyol as an optional component is not particularly limited as long as the function of the isocyanate group-terminated urethane prepolymer constituting the one-component adhesive composition of the present invention is not inhibited. The content proportion of another polyol as an optional component is preferably 30% by mass or less, more preferably 10% by mass or less, to the amount of the polyoxyalkylene polymer.

For the production of the isocyanate group-terminated urethane prepolymer, a catalyst can be used as needed.

Examples of the catalyst include tertiary amine-based compounds; tin-based compounds; and non-tin-based compounds. One catalyst can be used alone, or two or more catalysts can be used in combination.

Examples of the tertiary amine-based compounds include triethylamine, triethylenediamine, and 1,8-diazabicyclo[5.4.0]-7-undecene (DBU).

Examples of the tin-based compounds include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate.

Examples of the non-tin-based compounds include titanium-based compounds such as dibutyltitanium dichloride, tetrabutyl titanate, and butoxytitanium trichloride; lead-based compounds such as lead oleate, lead 2-ethylhexanoate, lead benzoate, and lead naphthenate; iron-based compounds such as iron 2-ethylhexanoate and iron acetylacetonate; cobalt-based compounds such as cobalt benzoate and cobalt 2-ethylhexanoate; zinc-based compounds such as zinc naphthenate and zinc 2-ethylhexanoate; and zirconium-based compounds such as zirconium naphthenate.

The amount of the catalyst used when the catalyst is used is not particularly limited but is preferably 0.001 parts by mass or more, more preferably 0.002 parts by mass or more, and particularly preferably 0.003 parts by mass or more and preferably 1.0 part by mass or less, more preferably 0.2 parts by mass or less, and particularly preferably 0.05 parts by mass or less based on 100 parts by mass of the total of the polyoxyalkylene polymer and the polyisocyanate compound.

For the production of the isocyanate group-terminated urethane prepolymer, a solvent can be used as needed.

Examples of the solvent include ketones such as acetone and methyl ethyl ketone; esters such as ethyl acetate; and aromatic hydrocarbons such as toluene and xylene. One solvent can be used alone, or two or more solvents can be used in combination.

The amount of the solvent used when the solvent is used is not particularly limited but is preferably 30 parts by mass or more, more preferably 40 parts by mass or more, and particularly preferably 50 parts by mass or more and preferably 500 parts by mass or less, more preferably 450 parts by mass or less, and particularly preferably 400 parts by mass or less based on 100 parts by mass of the total of the polyoxyalkylene polymer and the polyisocyanate compound.

Examples of the method for producing the isocyanate group-terminated urethane prepolymer include the methods described below.

Production method 1: a method of charging a polyisocyanate compound, a polyoxyalkylene polymer, an optional catalyst, and an optional solvent together

Production method 2: a method of charging a polyoxyalkylene polymer, an optional catalyst, and an optional solvent, and adding a polyisocyanate compound dropwise thereto

In the case of the production method 2, the low molecular components in the raw materials are preferentially reacted, the molecular weight distribution can be more narrowed, and the reaction is easily controlled.

The reaction temperature is preferably 50°C or more, more preferably 60°C or more, and particularly preferably 65 or more and preferably less than 100°C, more preferably 95°C or less, and particularly preferably 80°C or less. When the reaction temperature is within the range, side reactions other than the urethane reaction are easily suppressed, and therefore the desired isocyanate group-terminated urethane prepolymer is easily obtained.

After the completion of the reaction, a reaction terminating agent may be added to deactivate the catalyst. Examples of the reaction terminating agent include acetyl acetone. Two or more reaction terminating agents may be used in combination.

The Mn of the isocyanate group-terminated urethane prepolymer is not particularly limited but is preferably 8500 or more, more preferably 10000 or more, and particularly preferably 15000 or more and preferably 300000 or less, more preferably 250000 or less, and particularly preferably 200000 or less. When the Mn is within the preferred range, an adhesive composition excellent in coating properties is obtained, and the viscosity during the synthesis can be adjusted.

The Mn of the isocyanate group-terminated urethane prepolymer can be obtained by GPC measurement by the same method as for the polyoxyalkylene polymer.

In the one-component adhesive composition of the present invention, the inter-crosslinking molecular weight of the isocyanate group-terminated urethane prepolymer is not particularly limited but is preferably 2000 or more, more preferably 2500 or more, and particularly preferably 3000 or more and preferably 7000 or less, more preferably 6000 or less, and particularly preferably 5500 or less.

As used herein, the inter-crosslinking molecular weight of the isocyanate group-terminated urethane prepolymer means the value obtained by dividing the number average molecular weight (Mn) of the polyoxyalkylene polymer that is a raw material of such a prepolymer by the average number of hydroxyl groups.

When such inter-crosslinking molecular weight is in the range, the storage modulus of the obtained cured product is easily maintained in a wide temperature range.

The EO unit content to the total amount of oxyalkylene groups in the isocyanate group-terminated urethane prepolymer is 5% by mass or more and 60% by mass or less, preferably 7% by mass or more, more preferably 9% by mass or more, and particularly preferably 11% by mass or more. The EO unit content to the total amount of oxyalkylene groups in the isocyanate group-terminated urethane prepolymer is preferably 28% by mass or less, more preferably 25% by mass or less, and particularly preferably 22% by mass or less.

When the EO unit content to the total amount of oxyalkylene groups in the isocyanate group-terminated urethane prepolymer is within the preferred range, the crystallinity of the obtained one-component adhesive composition is suppressed, and therefore the viscosity decreases easily, and the handling easily becomes easy. In addition, the moist heat resistance of a cured product is better.

The EO unit content to the total amount of oxyalkylene groups in the isocyanate group-terminated urethane prepolymer is calculated by obtaining the monomer composition of the oxyalkylene chain using ¹H-NMR.

When the raw materials and the amounts used during the synthesis are known, the EO unit content to the total amount of oxyalkylene groups in the isocyanate group-terminated urethane prepolymer is the EO unit content to the total amount of oxyalkylene groups in the polyoxyalkylene polymer.

### (Method for Producing One-Component Adhesive Composition)

A known method can be applied to the method for producing the one-component adhesive composition of the present invention. The order of introduction of the components is not particularly limited.

In the production of the one-component adhesive composition of the present invention, it is possible to adopt a procedure in which the above-described particular polyoxyalkylene polymer is reacted with the above-described polyisocyanate compound to synthesize an isocyanate group-terminated urethane prepolymer first, and then an additive described later is blended into this isocyanate group-terminated urethane prepolymer, and the blend is uniformly stirred and mixed. Alternatively, it is possible to adopt a procedure in which the above-described particular polyoxyalkylene polymer or polyisocyanate compound and an additive, for example, a filler, are uniformly stirred and mixed first, and then the polyisocyanate compound or the polyoxyalkylene polymer is introduced and reacted with the polyoxyalkylene polymer or the polyisocyanate compound, that is, a procedure in which an isocyanate group-terminated urethane prepolymer is synthesized later.

When the one-component adhesive composition of the present invention is produced, a catalyst can be used as needed. For the types of the catalyst, the above-described catalysts are preferred. The amount of the catalyst used is preferably 0.01 parts by mass or more, more preferably 0.03 parts by mass or more, and particularly preferably 0.05 parts by mass or more and preferably 1.0 part by mass or less, more preferably 0.9 parts by mass or less, and particularly preferably 0.8 parts by mass or less based on 100 parts by mass of the isocyanate group-terminated urethane prepolymer. After the completion of the reaction, a reaction terminating agent is preferably added to deactivate the catalyst.

A solvent may be included in the one-component adhesive composition of the present invention as needed. For the types of the solvent, the above-described solvents are preferred. The amount of the solvent used is preferably 30 parts by mass or more, more preferably 40 parts by mass or more, and particularly preferably 50 parts by mass or more and preferably 500 parts by mass or less, more preferably 450 parts by mass or less, and particularly preferably 400 parts by mass or less based on 100 parts by mass of the isocyanate group-terminated urethane prepolymer.

The content of the isocyanate group-terminated urethane prepolymer in the one-component adhesive composition of the present invention is preferably 50% by mass or more and 100% by mass or less, more preferably 55% by mass or more, and further preferably 60% by mass or more and more preferably less than 100% by mass, further preferably 99.5% by mass or less, and particularly preferably 95% by mass or less.

The content of the isocyanate group-terminated urethane prepolymer in the solids of the one-component adhesive composition of the present invention is preferably 80% by mass or more, more preferably 90% by mass or more, and particularly preferably 95% by mass or more and may be 100% by mass.

### <Additives That Can Be Blended into One-Component Adhesive Composition>

The one-component adhesive composition of the present invention can include additives such as a hydrolysis inhibitor, an antioxidant, an ultraviolet absorbing agent, a light stabilizer, an antistatic agent, a leveling agent, and other optional components as needed, in a range that does not impair the effect of the present invention.

### -Hydrolysis Inhibitor-

Examples of the hydrolysis inhibitor include carbodiimide-based, isocyanate-based, oxazoline-based, and epoxy-based hydrolysis inhibitors. One hydrolysis inhibitor can be used alone, or two or more hydrolysis inhibitors can be used in combination. Among these, carbodiimide-based hydrolysis inhibitors are preferred from the viewpoint of a hydrolysis suppression effect.

### --Carbodiimide-Based Hydrolysis Inhibitors--

The carbodiimide-based hydrolysis inhibitors are compounds having one or more carbodiimide groups in one molecule. Examples of monocarbodiimide compounds include dicyclohexylcarbodiimide, diisopropylcarbodiimide, dimethylcarbodiimide, diisobutylcarbodiimide, dioctylcarbodiimide, diphenylcarbodiimide, and naphthyl carbodiimide.

Polycarbodiimide compounds can be produced by subjecting a diisocyanate to a decarboxylation condensation reaction in the presence of a carbodiimidization catalyst.

Examples of the diisocyanate include MDI, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, IPDI, 4,4'-dicyclohexylmethane diisocyanate, and tetramethylxylylene diisocyanate.

Examples of the carbodiimidization catalyst include phospholene oxides such as 1-phenyl-2-phospholene-1-oxide, 3-methyl-2-phospholene-1-oxide, 1-ethyl-3-methyl-2-phospholene-1-oxide, 1-ethyl-2-phospholene-1-oxide, and 3-phospholene isomers thereof.

### --Isocyanate-Based Hydrolysis Inhibitors--

Examples of the isocyanate-based hydrolysis inhibitors include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, IPDI, 4,4'-dicyclohexylmethane diisocyanate, and 3,3'-dimethyl-4,4'-dicyclohexylmethane diisocyanate.

### --Oxazoline-Based Hydrolysis Inhibitors--

Examples of the oxazoline-based hydrolysis inhibitors include 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), and 2,2'-diphenylenebis(2-oxazoline).

### --Epoxy-Based Hydrolysis Inhibitors--

Examples of the epoxy-based hydrolytic agents include diglycidyl ethers of aliphatic diols such as 1,6-hexanediol, neopentyl glycol, and polyalkylene glycols; polyglycidyl ethers of aliphatic polyols such as sorbitol, sorbitan, polyglycerol, pentaerythritol, diglycerol, glycerol, and trimethylolpropane; polyglycidyl ethers of alicyclic polyols such as cyclohexanedimethanol; diglycidyl esters or polyglycidyl esters of aliphatic or aromatic polyvalent carboxylic acids such as terephthalic acid, isophthalic acid, naphthalenedicarboxylic acid, trimellitic acid, adipic acid, and sebacic acid; diglycidyl ethers or polyglycidyl ethers of polyhydric phenols such as resorcinol, bis(p-hydroxyphenyl)methane, 2,2-bis(p-hydroxyphenyl)propane, tris(p-hydroxyphenyl)methane, and 1,1,2,2-tetrakis(p-hydroxyphenyl)ethane; N-glycidyl derivatives of amines such as N,N-diglycidylaniline, N,N-diglycidyltoluidine, and N,N,N',N'-tetraglycidyl-bis-(p-aminophenyl)methane; triglycidyl derivatives of aminophenols; triglycidyl tris(2-hydroxyethyl)isocyanurate; triglycidyl isocyanurate; and epoxy resins such as orthocresol type epoxy resins and phenol novolac type epoxy resins.

The amount of the hydrolysis inhibitor added is not particularly limited but is preferably 0.1 parts by mass or more, more preferably 0.2 parts by mass or more, and particularly preferably 0.5 parts by mass or more and preferably 5 parts by mass or less, more preferably 4.5 parts by mass or less, and particularly preferably 3 parts by mass or less based on 100 parts by mass of the isocyanate group-terminated urethane prepolymer.

### -Antioxidant-

Examples of the antioxidant include radical scavengers such as phenol-based compounds and amine-based compounds; and peroxide decomposers such as sulfur-based compounds and phosphorus-based compounds. One antioxidant can be used alone, or two or more antioxidants can be used in combination.

### --Phenol-Based Compounds--

Examples of the phenol-based compounds include 2,6-di-t-butyl-p-cresol, butylated hydroxyanisole, 2,6-di-t-butyl-4-ethylphenol, stearin-β-(3,5-di-t-butyl-4-hydroxyphenyl)propionate, 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), 3,9-bis[1,1-dimethyl-2-[β-(3-t-butyl-4-hydroxy-5-methylphenyl)propionyloxy]ethyl]2,4,8,10-tetraoxaspiro[5,5]undecane, benzenepropanoic acid, 3,5-bis(1,1-dimethylethyl)-4-hydroxy-,C7-C9 side chain alkyl esters (BASF product name Irganox 1135), 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis-[methylene-3-(3',5'-di-t-butyl-4'-hydroxyphenyl)propionate]methane, bis[3,3'-bis-(4'-hydroxy-3'-t-butylphenyl)butyric acid]glycol ester, 1,3,5-tris(3',5'-di-t-butyl-4'-hydroxybenzyl)-S-triazine-2,4,6-(1H,3H,5H)trione, and tocophenol.

### --Amine-Based Compounds--

Examples of the amine-based compounds include bis(2,2,6,6-tetramethyl-4-piperidyl)sebacate, polycondensates of dimethyl succinate and 1-(2-hydroxyethyl)-4-hydroxy-2,2,6,6-tetramethylpiperidineethanol, N,N',N",N‴-tetrakis-(4,6-bis-(butyl-(N-methyl-2,2,6,6-tetramethylpiperidin-4-yl)amino)-triazin-2-yl)-4,7-diazadecane-1,10-diamine, and polycondensates of dibutylamine-1,3,5-triazine-N,N'-bis(2,2,6,6-tetramethyl-4-piperidyl)-1,6-hexamethylenediamine and N-(2,2,6,6-tetramethyl-4-piperidyl)butylamine.

### --Sulfur-Based Compounds--

Examples of the sulfur-based compounds include dilauryl 3,3'-thiodipropionate, dimyristyl 3,3'-thiodipropionate, and distearyl 3,3'-thiodipropionate.

### --Phosphorus-Based Compounds--

Examples of the phosphorus-based compounds include triphenyl phosphite, diphenyl isodecyl phosphite, 4,4'-butylidene-bis(3-methyl-6-tert-butylphenyl ditridecyl)phosphite, cyclic neopentanetetrayl bis(octadecyl phosphite), tris(nonylphenyl)phosphite, tris(monononylphenyl)phosphite, tris(dinonylphenyl)phosphite, diisodecyl pentaerythritol diphosphite, 9,10-dihydro-9-oxa-10-phosphaphenanthrene-10-oxide, 10-(3,5-di-tert-butyl-4-hydroxybenzyl)-9,10-dihydro-9-oxa-10-phosphaphenanthrene-10-oxide, 10-decyloxy-9,10-dihydro-9-oxa-10-phosphaphenanthrene, tris(2,4-di-tert-butylphenyl)phosphite, cyclic neopentanetetrayl bis(2,4-di-tert-butylphenyl)phosphite, cyclic neopentanetetrayl bis(2,6-di-tert-butyl-4-methylphenyl)phosphite, and 2,2-methylenebis(4,6-di-tert-butylphenyl)octyl phosphite.

By using the antioxidant, the thermal deterioration of the isocyanate group-terminated urethane prepolymer can be prevented.

The amount of the antioxidant added is not particularly limited but is preferably 0.01 parts by mass or more, more preferably 0.1 parts by mass or more, and particularly preferably 0.2 parts by mass or more and preferably 5 parts by mass or less, more preferably 3 parts by mass or less, and particularly preferably 2 parts by mass or less based on 100 parts by mass of the isocyanate group-terminated urethane prepolymer.

As the antioxidant, one or more phenol-based compounds, which are radical scavengers, are preferably used from the viewpoint of stability and an oxidation prevention effect. It is also possible to use one or more phenol-based compounds, which are radical scavengers, and one or more phosphorus-based compounds, which are peroxide decomposers, in combination. It is also possible to use a phenol-based compound, which is a radical scavenger, and a phosphorus-based compound, which is a peroxide decomposer, in combination as antioxidants and use these antioxidants and a hydrolysis inhibitor described above in combination.

### -Ultraviolet Absorbing Agent-

Examples of the ultraviolet absorbing agent include benzophenone-based compounds, benzotriazole-based compounds, salicylic acid-based compounds, oxalic acid anilide-based compounds, cyanoacrylate-based compounds, and triazine-based compounds. One ultraviolet absorbing agent can be used alone, or two or more ultraviolet absorbing agents can be used in combination.

The amount of the ultraviolet absorbing agent added is not particularly limited but is preferably 0.01 parts by mass or more, more preferably 0.1 parts by mass or more, and particularly preferably 0.2 parts by mass or more and preferably 3 parts by mass or less, more preferably 2.5 parts by mass or less, and particularly preferably 2 parts by mass or less based on 100 parts by mass of the isocyanate group-terminated urethane prepolymer.

### -Light Stabilizer-

Examples of the light stabilizer include hindered amine-based compounds and hindered piperidine-based compounds. One light stabilizer can be used alone, or two or more light stabilizers can be used in combination.

The amount of the light stabilizer added is not particularly limited but is preferably 0.01 parts by mass or more, more preferably 0.1 parts by mass or more, and particularly preferably 0.2 parts by mass or more and preferably 2 parts by mass or less, more preferably 1.5 parts by mass or less, and particularly preferably 1 part by mass or less based on 100 parts by mass of the isocyanate group-terminated urethane prepolymer.

### -Antistatic Agent-

Examples of the antistatic agent include inorganic salts, polyhydric alcohol compounds, ionic liquids, and surfactants. One antistatic agent can be used alone, or two or more antistatic agents can be used in combination.

Among these, ionic liquids are preferred. The "ionic liquid" is also referred to as a room temperature molten salt and is a salt having fluidity at 25°C.

### --Inorganic Salts--

Examples of the inorganic salts include sodium chloride, potassium chloride, lithium chloride, lithium perchlorate, ammonium chloride, potassium chlorate, aluminum chloride, copper chloride, ferrous chloride, ferric chloride, ammonium sulfate, potassium nitrate, sodium nitrate, sodium carbonate, and sodium thiocyanate.

### --Polyhydric Alcohol Compounds--

Examples of the polyhydric alcohol compounds include propanediol, butanediol, hexanediol, polyethylene glycol, trimethylolpropane, and pentaerythritol.

### --Ionic Liquids--

Examples of the ionic liquids include ionic liquids including imidazolium ions such as 1-ethyl-3-methylimidazolium bis(trifluoromethylsulfonyl)imide, 1,3-dimethylimidazolium bis(trifluoromethylsulfonyl)imide, and 1-butyl-3-methylimidazolium bis(trifluoromethylsulfonyl)imide; ionic liquids including pyridinium ions such as 1-methylpyridinium bis(trifluoromethylsulfonyl)imide, 1-butylpyridinium bis(trifluoromethylsulfonyl)imide, 1-hexylpyridinium bis(trifluoromethylsulfonyl)imide, 1-octylpyridinium bis(trifluoromethylsulfonyl)imide, 1-hexyl-4-methylpyridinium bis(trifluoromethylsulfonyl)imide, 1-hexyl-4-methylpyridinium hexafluorophosphate, 1-octyl-4-methylpyridinium bis(trifluoromethylsulfonyl)imide, 1-octyl-4-methylpyridinium bis(fluorosulfonyl)imide, 1-methylpyridinium bis(perfluoroethylsulfonyl)imide, and 1-methylpyridinium bis(perfluorobutylsulfonyl)imide; ionic liquids including ammonium ions such as trimethylheptylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N-heptylammonium bis(trifluoromethanesulfonyl)imide, and tri-n-butylmethylammonium bistrifluoromethanesulfonimide; and other ionic liquids such as pyrrolidinium salts, phosphonium salts, and sulfonium salts.

### --Surfactants--

Examples of the surfactants include nonionic low molecular surfactants such as glycerin fatty acid esters, polyoxyalkylene alkyl ethers, polyoxyethylene alkyl phenyl ethers, polyoxyethylene alkylamines, polyoxyethylene alkylamine fatty acid esters, and fatty acid diethanolamides; anionic low molecular surfactants such as alkyl sulfonates, alkylbenzene sulfonates, and alkyl phosphates; cationic low molecular surfactants such as tetraalkylammonium salts and trialkylbenzylammonium salts; amphoteric low molecular surfactants such as alkyl betaines and alkylimidazolium betaines; nonionic polymeric surfactants such as a polyether ester amide type, an ethylene oxide-epichlorohydrin type, and a polyether ester type; anionic polymeric surfactants such as a polystyrene sulfonic acid type; cationic polymeric surfactants such as a quaternary ammonium base-containing acrylate polymer type; and amphoteric polymeric surfactants such as amino acid type amphoteric surfactants such as higher alkyl aminopropionates, and betaine type amphoteric surfactants such as higher alkyl dimethyl betaines and higher alkyl dihydroxyethyl betaines.

The amount of the antistatic agent added is not particularly limited but is preferably 0.01 parts by mass or more, more preferably 0.03 parts by mass or more, and particularly preferably 0.05 parts by mass or more and preferably 10 parts by mass or less, more preferably 5 parts by mass or less, and particularly preferably 3 parts by mass or less based on 100 parts by mass of the isocyanate group-terminated urethane prepolymer.

### -Leveling Agent-

Examples of the leveling agent include acrylic leveling agents, fluorine-based leveling agents, and silicone-based leveling agents. One leveling agent can be used alone, or two or more leveling agents can be used in combination. Among these, acrylic leveling agents are preferred.

The amount of the leveling agent added is not particularly limited but is preferably 0.001 parts by mass or more, more preferably 0.01 parts by mass or more, and particularly preferably 0.1 parts by mass or more and preferably 2 parts by mass or less, more preferably 1.5 parts by mass or less, and particularly preferably 1 part by mass or less based on 100 parts by mass of the isocyanate group-terminated urethane prepolymer.

### -Other Optional Components-

Examples of other optional components include catalysts, other resins other than isocyanate terminated urethane prepolymers, fillers (talc, calcium carbonate, titanium oxide, and the like), metal powders, colorants (pigments and the like), foil-like materials, softening agents, conductive agents, silane coupling agents, lubricants, corrosion inhibitors, heat resistance stabilizers, weather resistance stabilizers, polymerization inhibitors, and antifoaming agents.

The content proportion of oxyethylene groups to the total amount of oxyalkylene groups in the one-component adhesive composition of the present invention is not particularly limited but is preferably 10% by mass or more, more preferably 12% by mass or more, and particularly preferably 15% by mass or more and preferably 70% by mass or less, more preferably 60% by mass or less, and particularly preferably 50% by mass or less. When the content proportion of oxyethylene groups to the total amount of oxyalkylene groups in the one-component adhesive composition of the present invention is within the preferred range, the adhesiveness to a high polarity base material improves more, and the moist heat resistance improves easily.

The EO unit content to the total amount of oxyalkylene groups in the one-component adhesive composition is calculated by obtaining the monomer composition of the oxyalkylene chain using ¹H-NMR.

The one-component adhesive composition of the present invention can be used for adhering glass, rubber, or a metal to a resin material or the like. Examples of the resin material include polyolefins such as polypropylene, polyethylene, ethylene-propylene copolymers, and cycloolefin polymers; polyesters such as polyethylene terephthalate and polybutylene terephthalate; polymethyl methacrylate; polycarbonates; polystyrene; acrylonitrile-styrene copolymers; polyvinyl chloride; polyacetates; acrylonitrile-butadienestyrene copolymers; and polyamides.

These resin materials may be subjected to surface treatment such as flame treatment, corona treatment, or ITRO treatment. These resin materials may contain a filler such as talc, calcium carbonate, or alumina and may be reinforced with carbon fibers, glass fibers, or the like.

The one-component adhesive composition of the present invention can be used for the joining of the parts of not only an automobile body but various structures. The one-component adhesive composition of the present invention can also be used, for example, as a paint, a waterproof material, a floor material, an elastomer, an artificial leather, and spandex, in addition to being used as an adhesive.

### (Cured Product)

The cured product of the present invention is a cured product obtained by curing the one-component adhesive composition of the present invention and is, for example, a cured product cured by moisture. Here, the "moisture" means "water vapor included in air".

### Examples

The present invention will be described in detail below by giving Examples. However, the present invention is not limited by the following Examples.

### <Synthesis of Polyoxyalkylene Polymer>

### [Synthesis Example 1]

As the initiator, a triol (Mn: 1000) obtained by subjecting propylene oxide to ring-opening polymerization to glycerin was used (hereinafter referred to as an "initiator A").

7800 g of propylene oxide was polymerized in the presence of a zinc hexacyanocobaltate-tert-butanol complex catalyst (hereinafter referred to as a "TBA-DMC catalyst") using 1000 g of the initiator A, and then subsequently 1200 g of ethylene oxide was further polymerized using a KOH catalyst to obtain a polyoxyalkylene polymer (hereinafter referred to as a "polyol A1") which was polyoxypropylene triol having EO units in a block form and in which the content of EO units was 12.0% by mass.

The Mn, average number of hydroxyl groups, hydroxyl value, content of EO units, and inter-crosslinking molecular weight of the obtained polyoxyalkylene polymer (polyol A1) were measured as follows. The results are shown in Table 1.

### <Number Average Molecular Weight (Mn)>

The Mn of the polyoxyalkylene polymer is the polystyrene equivalent molecular weight obtained by measurement by gel permeation chromatography (GPC) under the following conditions using a calibration curve prepared using standard polystyrene samples whose molecular weight is known.

### <GPC Measurement Conditions>

Type of machine used: HLC-8220GPC (manufactured by Tosoh Corporation)
Data processing apparatus: SC-8020 (manufactured by Tosoh Corporation)
Columns used: Two of TSG gel SuperMultiporeHZ 4000 (manufactured by Tosoh Corporation) and two of TSG gel SuperMultiporeHZ 2500 (manufactured by Tosoh Corporation) were coupled and used.
Column temperature: 40°C
Detector: RI
Solvent: tetrahydrofuran
Flow rate: 0.35 mL/min
Sample concentration: 0.5% by mass
Amount injected: 20 µL
Standard samples for calibration curve preparation: polystyrene ([Easical] PS-2 [Polystyrene Standards], manufactured by Polymer Laboratories)

### <Average Number of Hydroxyl Groups (f)>

The number of hydroxyl groups (3) of the initiator (glycerin) used in the synthesis of each polyoxyalkylene polymer was the average number of hydroxyl groups (f) of each polyoxyalkylene polymer as it was.

### <Hydroxyl Value>

The hydroxyl value of the polyoxyalkylene polymer was calculated according to the B method of JIS K 1557-1: 2007.

### <Degree of Unsaturation>

The degree of unsaturation of a polyoxyalkylene polymer is a value measured according to the method of JIS K1557-3:2007.

### <Content of Oxyethylene Groups (EO Units)>

The content of EO units to the total amount of oxyalkylene groups in the polyoxyalkylene polymer was calculated by obtaining the monomer composition of the oxyalkylene chain using ¹H-NMR. For example, when the polyoxyalkylene polymer is a polyol including propylene oxide and ethylene oxide, the EO unit content can be obtained from the area ratio of the signal of the methyl group in the oxypropylene unit to the signals of the methylene groups in the oxypropylene unit and in the EO unit.

### <Inter-Crosslinking Molecular Weight>

The inter-crosslinking molecular weight of the polyoxyalkylene polymer was obtained by dividing Mn by f.

### [Synthesis Example 2]

9000 g of a mixture obtained by mixing propylene oxide and ethylene oxide in the ratio of 78% to 22% was polymerized in the presence of a TBA-DMC catalyst using 1000 g of the initiator A to obtain a polyoxyalkylene polymer (hereinafter referred to as a "polyol A2") which was polyoxypropylene triol having EO units in a random form and in which the content of EO units was 19.8% by mass.

### [Synthesis Example 3]

14000 g of a mixture obtained by mixing propylene oxide and ethylene oxide in the ratio of 22% to 78% was polymerized in the presence of a TBA-DMC catalyst using 1000 g of the initiator A to obtain a polyoxyalkylene polymer (hereinafter referred to as a "polyol A3") which was polyoxypropylene triol having EO units in a random form and in which the content of EO units was 20.5% by mass.

### [Synthesis Example 4]

9000 g of propylene oxide was polymerized in the presence of a TBA-DMC catalyst using 1000 g of the initiator A to obtain a polyoxyalkylene polymer (hereinafter referred to as a "polyol C1") which was polyoxypropylene triol.

### [Synthesis Example 5]

11000 g of propylene oxide was polymerized in the presence of a TBA-DMC catalyst using 1000 g of the initiator A to obtain a polyoxyalkylene polymer (hereinafter referred to as a "polyol C2") which was polyoxypropylene triol.

### [Synthesis Example 6]

14000 g of propylene oxide was polymerized in the presence of a TBA-DMC catalyst using 1000 g of the initiator A to obtain a polyoxyalkylene polymer (hereinafter referred to as a "polyol C3") which was polyoxypropylene triol.

### [Synthesis Example 7]

9000 g of a mixture obtained by mixing propylene oxide and ethylene oxide in the ratio of 28% to 78% was polymerized in the presence of a TBA-DMC catalyst using 1000 g of the initiator A to obtain a polyoxyalkylene polymer (hereinafter referred to as a "polyol C4") which was polyoxypropylene triol having EO units in a random form and in which the content of EO units was 70.2% by mass.

### [Synthesis Example 8]

3360 g of propylene oxide was polymerized in the presence of an alkali catalyst using 1000 g of the initiator A, and then 740 g of ethylene oxide was polymerized, and the neutralized salt was removed to obtain a polyoxyalkylene polymer (hereinafter referred to as a "polyol C5") which was polyoxypropylene triol having EO units in a block form and in which the content of EO units was 13.0% by mass.

### [Synthesis Example 9]

4520 g of propylene oxide was polymerized in the presence of a TBA-DMC catalyst using 1000 g of the initiator A to obtain polyoxypropylene triol, and subsequently 480 g of ethylene oxide was further polymerized using a KOH catalyst to obtain a polyoxyalkylene polymer (hereinafter referred to as a "polyol C6") which was polyoxypropylene triol having EO units in a block form and in which the content of EO units was 8.0% by mass.

The Mn, average numbers of hydroxyl groups, hydroxyl values, content of EO units, and inter-crosslinking molecular weight of the polyols A2 to A3 and C1 to C6 obtained in Synthesis Examples 2 to 9 are also shown together in Table 1.

**Table 1**

| Polyol | Number average molecular weight (Mn) | Average number of hydroxyl groups | Hydroxyl value (mgKOH/g) | EO content (% by mass) | Inter-crosslinking molecular weight |
|---|---|---|---|---|---|
| A1 | 10000 | 3 | 17.0 | 12.0 | 3333 |
| A2 | 10000 | 3 | 16.9 | 19.8 | 3333 |
| A3 | 15000 | 3 | 10.7 | 20.5 | 5000 |
| C1 | 10000 | 3 | 17.0 | - | 3333 |
| C2 | 12000 | 3 | 14.0 | - | 4000 |
| C3 | 15000 | 3 | 11.5 | - | 5000 |
| C4 | 10000 | 3 | 16.8 | 70.2 | 3333 |
| C5 | 5100 | 3 | 32.9 | 13.0 | 1700 |
| C6 | 6000 | 3 | 28.2 | 8.0 | 2000 |

<Production of Isocyanate Group-Terminated Urethane Prepolymers (One-Component Adhesive Compositions)>

### [Production Example 1]

28.8 g of a polyisocyanate compound (polymeric MDI: Millionate MR manufactured by Tosoh Corporation, isocyanate group content 31% by mass) was added to a reaction container equipped with a thermometer, a stirrer, and a cooling tube. Then, 160.0 g of the polyol A1 was added, mixed at room temperature, then gradually heated, and reacted at an internal temperature of about 80°C for about 6 h. Here, the isocyanate index at the start of the reaction was 438, and the theoretical content of isocyanate groups including an end was 3.65% by mass.

After it was confirmed by a hydrochloric acid titration method in accordance with JIS K 7301 that the isocyanate group content was equal to or less than the theoretical content, the reaction liquid was cooled to room temperature to obtain an isocyanate group-terminated urethane prepolymer (one-component adhesive composition). In Table 2, "Isocyanate index" is a value obtained by centupling the ratio of the number of moles of the isocyanate groups of a polyisocyanate compound to the total number of moles of the hydroxyl groups of a polyoxyalkylene polymer used when an isocyanate group-terminated urethane prepolymer is produced.

### [Production Examples 2 to 10]

Isocyanate group-terminated prepolymers (one-component adhesive compositions) were obtained by the same procedure as in Production Example 1 except that the types of the polyol and the polyisocyanate compound and the amounts of the polyol and the polyisocyanate compound blended (parts by mass) were changed as shown in Table 2. Here, the polyisocyanate compound used in Example 2 is meta-xylylene diisocyanate (TAKENATE 500 manufactured by Mitsui Chemicals, Inc., isocyanate group content 44.7% by mass).

The isocyanate index and the theoretical isocyanate group content for Production Examples 2 to 10 are shown in Table 2.

### [Example 1 to Example 10]

Creep resistance, breaking strength, a strength reaching rate, breaking strength after moist heat, storage moduli at -40°C and 130°C, and a modulus ratio were evaluated as follows. The evaluation results are shown together in Table 2.

### <Thermal Creep Resistance>

A first non-treated fiber-reinforced unsaturated polyester resin (SMC) base material (3 mm) was coated with each of the isocyanate group-terminated prepolymers (one-component adhesive compositions) obtained in the Production Examples, and further a second SMC base material was superposed on and pressure-bonded to the coating isocyanate group-terminated urethane prepolymer so that the thickness of the isocyanate group-terminated urethane prepolymer was 250 µm. Thus, an adhesive curing sample was obtained. Subsequently, the sample was allowed to stand at 20°C and 60% RH (relative humidity) for 168 h for aging.

After the aging, a weight was mounted in a simplified holding power tester BE-502 (manufactured by TESTER SANGYO CO. LTD.) so as to obtain a load of 375.3 N [38.3 kgf] per 625 mm² (25 mm × 25 mm) of the adhesion area. A creep test was performed at 90°C in the 180° shear direction, and the time (s) to the fall of the weight was measured.

A case where the weight did not fall during 500000 s was "Good (circle)", and a case where the weight fell during 500000 s was "Poor (cross mark)".

### <Breaking Strength>

A biaxially stretched polypropylene release film was coated with each of the isocyanate group-terminated prepolymers (one-component adhesive compositions) obtained in the Production Examples, so that the thickness was 200 µm, and allowed to stand under an atmosphere of 20°C and 60% RH (relative humidity) for 7 days for curing. The release film was peeled to obtain a sheet-like adhesive cured product. According to JIS K 7312: 1996, for each sheet-like adhesive cured product, the tensile breaking strength (unit: MPa) was measured under the condition of a tensile rate of 300 mm/min using TENSILON (manufactured by A&D Company, Limited, product name: RTG-13 10).

### <Strength Reaching Rate>

In the same manner as in the case described for the breaking strength, biaxially stretched polypropylene release films were coated with a one-component adhesive composition so that the thickness was 200 µm. The coated release films were allowed to stand under an atmosphere of 20°C and 60% RH (relative humidity) for 24 h to 168 h every 24 h starting immediately after the coating. For each of the sheet-like adhesive cured products obtained by peeling the release films, the breaking strength was measured. The value of the breaking strength (MPa) of the sheet-like adhesive cured product obtained after the standing for 24 h was divided by the value of the maximum breaking strength (maximum breaking strength (MPa)) measured, of other sheet-like adhesive cured products, and multiplied by 100 to calculate the strength reaching rate (%).

### <Breaking Strength after Moist Heat>

In the same manner as in the case described for the breaking strength, a biaxially stretched polypropylene release film was coated with a one-component adhesive composition so that the thickness was 200 µm. The coated release film was allowed to stand under an atmosphere of 20°C and 60% RH (relative humidity) for 168 h starting immediately after the coating, then further allowed to stand under an atmosphere of 60°C and 90% RH (relative humidity) for 24 h, and then allowed to stand under an atmosphere of 23°C and 50% RH (relative humidity) for 2 h, and then the release film was peeled to obtain a sheet-like adhesive cured product. For the obtained sheet-like adhesive cured product, the breaking strength (breaking strength after moist heat) was measured in the same manner as above. The measured breaking strength after moist heat was divided by the maximum breaking strength used for the calculation of the strength reaching rate, and multiplied by 100 to calculate the retention rate of breaking strength after moist heat (%).

### <Storage Moduli and Modulus Ratio>

In the same manner as in the case described for the breaking strength, a biaxially stretched polypropylene release film was coated with a one-component adhesive composition so that the thickness was 200 µm. The coated release film was allowed to stand under an atmosphere of 20°C and 60% RH (relative humidity) for 168 h starting immediately after the coating, and then the release film was peeled to obtain a sheet-like adhesive cured product. For the obtained sheet-like adhesive cured product, the storage moduli (E') in the temperature range of -80°C or more and 150°C or less were measured under the conditions of a strain of 1% and a heating rate of 3°C/min in a tensile mode using a dynamic viscoelasticity measuring apparatus (DMA242E Artemis manufactured by Netzsch).

The storage moduli (MPa) at -40°C and 130°C were read from the obtained storage viscoelastic modulus curve. The proportion of the storage modulus at 130°C (β) to the storage modulus at -40°C (α) (β/α; %) is shown in the table as the modulus ratio. It is meant that as the modulus ratio approaches 100%, the temperature dependence of the modulus decreases, and the lifting and peeling and cracking of the cured product can be suppressed even at low temperature.

**Table 2**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Blending | Polyol type | (parts by mass) | A1 (160.0) | A1 (180.0) | A2 (160.0) | A3 (188.2) | C1 (160.0) | C2 (200.0) | C3 (200.0) | C4 (180.0) | C5 (120.0) | C6 (124.0) |
| | Isocyanate*¹ | (parts by mass) | a (28.8) | b (20.0) | a (28.8) | a (28.8) | a (28.8) | a (28.8) | a (28.8) | a (28.8) | a (28.8) | a (28.8) |
| | [NCO content (% by mass)] | | 31.0 | 44.7 | 31.0 | 31.0 | 31.0 | 31.0 | 31.0 | 31.0 | 31.0 | 31.0 |
| Prepolymer characteristics | Isocyanate index | | 438 | 355 | 440 | 557 | 438 | 473 | 532 | 502 | 302 | 336 |
| | NCO group content [% by mass (theoretical value)] | | 3.65 | 2.52 | 3.65 | 3.20 | 3.65 | 3.37 | 3.17 | 3.30 | 4.01 | 4.11 |
| Cured product physical properties | Thermal creep resistance | (s) | >604800 | >604800 | >604800 | 558934 | 414 | 214 | 62 | >604800 | 254795 | >604800 |
| | | Evaluation | ○ | ○ | ○ | ○ | × | × | × | ○ | × | ○ |
| | Breaking strength | (MPa) | 3.71 | 6.23 | 2.92 | 3.14 | 2.15 | 2.20 | 2.40 | 4.63 | 3.58 | 2.40 |
| | Strength reaching rate | (%) | 78 | 84 | 55 | 68 | 82 | 80 | 78 | 76 | 66 | 79 |
| | Retention rate of breaking strength after moist heat | (%) | 111.0 | 97.5 | 110.0 | 116.0 | 105.0 | 110.0 | 111.0 | 51.0 | 100.0 | 142.0 |
| | -40°C storage modulus (α) | (MPa) | 9.7 | 16.9 | 12.8 | 8.4 | 15.5 | 13.3 | 6.6 | 10.0 | 59.9 | 63.0 |
| | 130°C storage modulus (β) | (MPa) | 7.6 | 16.3 | 6.6 | 5.8 | 7.3 | 4.9 | 2.1 | 10.2 | 12.4 | 11.3 |
| | Modulus ratio (β/α) | (%) | 78.3 | 96.4 | 51.6 | 69.0 | 47.1 | 36.8 | 31.8 | 103.0 | 20.7 | 17.9 |

| | | | | | | | | | | | | |
|---|---|---|---|---|---|---|---|---|---|---|---|---|
| *1) a: polymeric MDI b: XDI | | | | | | | | | | | | |

As shown in Table 2, in Examples 1 to 4, the one-component adhesive compositions after curing are excellent in moist heat resistance (retention rate of breaking strength after moist heat: 95% or more), have a low temperature dependence of the storage modulus (ratio between storage moduli at -40°C and 130°C: 50% or more), can stably exhibit adhesiveness in a wide temperature region, are further excellent in creep resistance at high temperature (90°C), and can maintain adhesiveness even under high temperature.

In contrast to this, in Examples 5 to 10, a one-component adhesive composition was not obtained that simultaneously satisfied moist heat resistance, the temperature dependence of the storage modulus, stable adhesiveness in a wide temperature region, and heat resistance with which adhesiveness could be maintained even under high temperature.

### Industrial Applicability

The one-component adhesive composition obtained by the present invention can be preferably used for the joining of the parts of various structures such as an automobile body. The two-component adhesive composition of the present invention is preferably used, for example, as a paint, a waterproof material, a floor material, an elastomer, an artificial leather, and spandex, in addition to being used as an adhesive.

## Claims

1. A one-component adhesive composition comprising an isocyanate group-terminated urethane prepolymer obtained by reacting a polyoxyalkylene polymer with a polyisocyanate compound, wherein
the polyoxyalkylene polymer has a functional group that can react with an isocyanate group, and has a number average molecular weight of 8000 or more, and in the polyoxyalkylene polymer, a content proportion of oxyethylene groups to a total amount of oxyalkylene groups is 5% by mass or more and 60% by mass or less.

2. The one-component adhesive composition according to claim 1, wherein a number of functional groups of the polyoxyalkylene polymer is 3 or more.

3. The one-component adhesive composition according to claim 1 or 2, wherein the polyoxyalkylene polymer comprises a unit based on propylene oxide.

4. The one-component adhesive composition according to claim 1 or 2, wherein inter-crosslinking molecular weight obtained by dividing the number average molecular weight of the polyoxyalkylene polymer by a number of functional groups per molecule of the polyoxyalkylene polymer is 2000 or more and 6000 or less.

5. The one-component adhesive composition according to claim 1 or 2, wherein the functional group is a hydroxyl group.

6. The one-component adhesive composition according to claim 5, wherein an isocyanate index representing 100 times a molar ratio of isocyanate groups in the polyisocyanate compound to hydroxyl groups in the polyoxyalkylene polymer (isocyanate group/hydroxyl group) is 300 or more and 600 or less.

7. The one-component adhesive composition according to claim 1 or 2, wherein the polyisocyanate compound contains 20 to 40% by mass of isocyanate groups.

8. The one-component adhesive composition according to claim 1 or 2, wherein an inter-crosslinking molecular weight of the isocyanate group-terminated urethane prepolymer is 2000 or more and 6000 or less.

9. The one-component adhesive composition according to claim 1 or 2, wherein oxyethylene group content to a total amount of oxyalkylene groups in the isocyanate group-terminated urethane prepolymer is 5% by mass or more and 60% by mass or less.

10. The one-component adhesive composition according to claim 1 or 2, wherein a content of the isocyanate group-terminated urethane prepolymer is 50% by mass or more and 100% by mass or less based on a total amount of the one-component adhesive composition.

11. A cured product obtained by curing the one-component adhesive composition according to claim 1 or 2.

12. The cured product according to claim 11, cured by moisture.
